# EUROPÄISCHE PATENTSCHRIFT

(11) **EP 2 648 094 B1**
(45) Veröffentlichungstag und Bekanntmachung des Hinweises auf die Patenterteilung: **07.06.2017**
(21) Anmeldenummer: 13161976.9
(22) Anmeldetag: 02.04.2013
(51) Int. Cl.: G06F 9/44, G06F 9/45

(54) **VERFAHREN UND SYSTEM ZUM ERZEUGEN EINES QUELLCODES FÜR EIN COMPUTERPROGRAMM ZUR AUSFÜHRUNG UND SIMULATION EINES PROZESSES**
METHOD AND SYSTEM FOR CREATING A SOURCE CODE FOR A COMPUTER PROGRAM FOR EXECUTING AND SIMULATING A PROCESS
PROCÉDÉ ET SYSTÈME DE PRODUCTION D'UN CODE SOURCE POUR UN PROGRAMME INFORMATIQUE POUR L'EXÉCUTION ET LA SIMULATION D'UN PROCESSUS

(30) Priorität: 03.04.2012 DE 102012102883
(43) Veröffentlichungstag der Anmeldung: 09.10.2013
(73) Patentinhaber: Metasonic AG, 85276 Pfaffenhofen (DE)
(72) Erfinder: Fleischmann, Albert, 85276 Pfaffenhofen (DE)
(74) Vertreter: Patronus IP Patent- und Rechtsanwälte

(56) Entgegenhaltungen:
- EP-A2- 1 589 416

## Beschreibung

Die vorliegende Erfindung betrifft ein Verfahren und ein System zum Erzeugen eines Quellcodes für ein Computerprogramm zur Ausführung bzw. Simulation eines Prozesses.

Aus der EP 1 589 416 A2 ist ein Verfahren und ein System zum Erzeugen eines Quellcodes für ein Computerprogramm zur Ausführung bzw. Simulation eines komplexen Prozesses bekannt. Bei diesem Verfahren wird automatisch aus einer Prozessdatei, in der Prozesse beschrieben sind, ein Quellcode für ein Computerprogramm erzeugt. Die Prozessdatei wird von einem Benutzer vorzugsweise mittels einer grafischen Benutzerschnittstelle (GUI) erstellt, wobei Hilfsmittel bereitgestellt werden, mit welcher in der grafischen Darstellung einzelne Subjekte darstellbar sind, wobei zwischen den einzelnen Subjekten Nachrichten ausgetauscht werden. Hier ergibt sich somit eine Darstellung, die einem Flussdiagramm ähnlich ist.

Beim Erzeugen des Quellcodes wird für ein jedes Subjekt eine separate Quellcodedatei erzeugt, wobei grundsätzlich nur zwischen den Befehlen "Tun", "Senden" und "Empfangen" unterschieden wird. Durch das Vorsehen separater Quellcodedateien für die einzelnen Subjekte können selbst für sehr komplexe Prozesse automatisch ein ausführbarer Quellcode erzeugt werden, da die einzelnen Quellcodedateien sehr einfach ausgebildet sind. Die Komplexität wird durch eine Vielzahl von Quellcodedateien bewältigt, die miteinander mittels Nachrichten kommunizieren. Es hat sich herausgestellt, dass auch in einem sehr komplexen Prozess die einzelnen Subjekte lediglich mit wenigen weiteren Subjekten kommunizieren, so dass trotz einer Vielzahl von Subjekten das einzelne Subjekt einfach und kompakt ausgebildet ist.

In der noch nicht veröffentlichten europäischen Patentanmeldung mit der Anmeldenummer EP 12151052.3 wird ein weiteres System und Verfahren zum Erzeugen eines Quellcodes für ein Computerprogramm zur Ausführung bzw. Simulation eines Prozesses aus einer vom Quellcode unabhängigen grafischen Prozessbeschreibung beschrieben. Das System umfasst einen Prozess-Generator und einen QuellcodeGenerator. Der Prozess-Generator ist derart ausgebildet, dass Cluster mit mehren Subjekten automatischen erzeugt werden, wobei mit dem Erzeugen der Subjekte gleichzeitig alle möglichen Nachrichtenaustausche zwischen den Subjekten erzeugt werden. Der Prozess-Generator stellt Funktionen zum Löschen einzelner automatisch erzeugter Nachrichten zur Verfügung und eine Funktion zum Erzeugen einzelner Nachrichten zwischen einem der Subjekte des Clusters mit einem Subjekt, das Bestandteil des Clusters ist. Der Prozess-Generator unterstützt somit die Erzeugung der Cluster und erlaubt die Verknüpfung unterschiedlicher Cluster, wodurch komplexe Prozesse sehr einfach, schnell und zuverlässig moduliert werden können. Diese Prozesse werden in einen sofort ausführbaren Quellcode umgesetzt.

Die beiden oben erläuterten Verfahren bewähren sich in der Praxis sehr, da die grafische Beschreibung der Prozesse vom Benutzer einfach erstellt werden kann und dann automatisch ein Quellcode für ein Computerprogramm erzeugt wird. Bei beiden Verfahren wird ein komplexer Prozess in mehrere Quellcodedateien aufgeteilt, wobei eine Quellcodedatei jeweils ein einzelnes oder eine Gruppe von Subjekten (= Cluster) umfassen kann.

Bei diesen Verfahren ist es schwierig, da die Beschreibung der Prozesse in Flussdiagrammen ähnlichen Darstellungen vorliegt, einen Überblick über die beteiligten Parteien und deren Beitrag zum Prozess zu erhalten.

Andere Verfahren und Systeme zum Darstellen von Prozessen verwenden oftmals Hierarchien. So ist es bekannt, drei bis fünf Ebenen in solchen Hierarchien darzustellen (z. B. P.McDermott A-Sharp; Workflow Modeling; Artech House 2009, Seite 53; Horvath and Partner, editors. Prozessmanagement umsetzen; Schäfer Pöschl, 2005, Seite 52; R. Nelius, D. Slama; Enterprise BPM; dpunkt Verlag, 2011, Seite 92). Diese Ebenen werden meistens als Prozessbereiche, Geschäftsprozesse, Prozesse, Unterprozesse oder Aktivitäten bezeichnet. Dabei werden auch Geschäftsprozesse als Kernprozesse und Hauptprozesse definiert.

In dem System ARIS (A.W.Scheer; ARIS - Vom Geschäftsprozess zum Anwendungssystem; Springer Verlag, 4. Auflage, 2001) werden Prozessketten verwendet, um einen Überblick über einen Prozess zu geben. Eine Prozesskette zeigt den Prozess eines Prozesssystems und definiert die Sequenz, in welcher diese Prozesse im Prozesssystem ausgeführt werden können. Es gibt hier mehrere Ebenen von Prozessketten. Dies bedeutet, dass ein Element, das einen Prozess in einer Prozesskette darstellt, selbst eine Prozesskette enthalten kann. In der untersten Ebene enthält jedes Element einer Prozesskette eine sogenannte event process chain (EPC). Die EPC enthält die in einem Prozess auszuführenden Aktivitäten. In dieser untersten Ebene sind die EPCs mit den handelnden Personen bzw. Objekten verknüpft, die die Aktivität ausführen. Nur in dieser untersten Ebene kann man erkennen, wer in einem Prozess involviert ist.

BPMN weist Pools und Schwimmbahnen (swim lanes) zum Beschreiben von Prozessstrukturen auf (siehe OMG; Business Process Modell and Notation (bpmn); Technical report; Zugriff; Dezember 2011). Jeder Pool kann eine oder mehrere Schwimmbahnen umfassen. Es ist nicht erlaubt, dass ein Pool in einem anderen Pool oder eine Schwimmbahn in einer anderen Schwimmbahn vorgesehen wird. Aktivitäten werden Schwimmbahnen zugeordnet. Hier gibt es drei Abstraktionsebenen: Pools, Schwimmbahnen und Aktivitäten. Die Aktivitäten sind jeweils mit den auszuführenden Parteien verknüpft. Auch bei dieser Darstellung von Prozessen sind die beteiligten Personen oder Objekte nur in der untersten Ebene sichtbar.

ARIS und BPMN sind in der Praxis weit verbreitet. Jedoch ist es bei diesen Verfahren nicht möglich, aus den Beschreibungen der Prozesse automatisch einen ausführbaren Quellcode zu erzeugen. Zudem ist es auch hier schwierig, einen Überblick über die beteiligten Parteien und Objekte zu erhalten und deren Beitrag an den jeweiligen Prozessen zu erkennen.

Es ist bekannt, bei der zur Simulierung von Prozessen eine Matrix zu verwenden (z.B. US 2006/206 366 A1, US 2007/0100673 A1,US 2010/0082498 A1).

Der vorliegenden Erfindung liegt die Aufgabe zugrunde ein Verfahren und ein System zum Erzeugen eines Quellcodes für ein Computerprogramm zur Ausführung bzw. Simulation eines Prozesses zu schaffen, mit welchen automatisch ein ausführbarer Quellcode erzeugt wird und das zudem einem Benutzer auf einfache Art und Weise eine Übersicht über die beteiligten Parteien und Objekte und deren Beteiligung am jeweiligen Prozess erlaubt.

Die Erfindung wird mit einem Verfahren nach Anspruch 1 und einem System nach Anspruch 8 gelöst. Vorteilhafte Ausgestaltungen sind in den jeweiligen Unteransprüchen angegeben.

Das erfindungsgemäße Verfahren zum Erzeugen eines Quellcodes für ein Computerprogramm zur Ausführung bzw. Simulation eines Prozesses umfasst folgende Schritte:
- Analysieren einer Prozessbeschreibung, in welcher ein Prozess in Form zumindest einer Matrix (S-PM) dargestellt ist, wobei in der Matrix Subjekte und Prozessphasen mit Aktionen derart verknüpft sind, dass durch die Matrix bestimmt ist, welche Aktionen in den jeweiligen Prozessphasen von welchem Subjekt ausgeführt werden, wobei anhand vorbestimmter Regeln beim Analysieren Nachrichten erzeugt werden, die zwischen den Subjekten ausgetauscht werden, und
- automatisches Erzeugen eines Quellcodes anhand der in der Matrix enthaltenen Informationen zu den Subjekten und den Aktionen und anhand der mit dem Analysieren ermittelten Nachrichten.

Erfindungsgemäß wird somit die Matrix analysiert, in welcher Subjekte und Phasen eines Prozesses mittels auszuführender Aktionen verknüpft sind, wobei bei dieser Analyse der Matrix Nachrichten, die zwischen den Subjekten ausgetauscht werden, erzeugt werden, und anhand der Beschreibung des Prozesses mittels der Subjekte und der zwischen den Subjekten auszutauschenden Nachrichten ein Quellcode erzeugt wird.

Sobald die Nachrichten vorliegen, kann mit dem aus der EP 1 589 416 A2 bekannten Verfahren oder mit einem Verfahren, das dem in der europäischen Patentanmeldung EP 12151052.3 beschriebenen Verfahren, etwa entspricht, automatisch ein ausführbarer Quellcode erzeugt werden. Auf diese beiden Dokumente wird deshalb vollumfänglich Bezug genommen.

Mit dem erfindungsgemäßen Verfahren werden aus der Matrix, in der die Subjekte mit Phasen des Prozesses anhand von Aktionen verknüpft sind, automatisch Nachrichten erzeugt. Hierdurch ist es möglich, einen Prozess durch eine Matrix darzustellen, in welchen die Subjekte, d.h. die beteiligten Personen bzw. Objekte aufgelistet sind und mit den jeweiligen Prozessphasen mittels Aktionen verknüpft sind. Diese Beschreibung des Prozesses gibt einem Benutzer unmittelbar einen Überblick über die beteiligten Personen bzw. Objekte und deren Tätigkeit im jeweiligen Prozess. Es ist daher nicht notwendig, den Prozess mit einem einem Flussdiagramm ähnlichen Diagramm zu beschreiben, aus welchem Quellcode generiert werden kann, sondern es genügt sehr kompakte, einen Überblick gewährenden Diagrammen in Form von Matrizen zu erstellen, aus welchen dann automatisch ein Quellcode erzeugt werden kann.

Ein Benutzer, der einen Prozess simuliert, muss somit lediglich die Matrix (S-PM) erstellen, kann diese dann automatisch in einen ausführbaren Quellcode umwandeln und durch Ausführen des Quellcodes schnell feststellen, ob seine Beschreibung des Prozesses korrekt ist.

Es ist zwar bekannt, bei der zur Simulierung von Prozessen eine Matrix zu verwenden (z.B. US 2006/206 366 A1, US 2007/0100673 A1,US 2010/0082498 A1), jedoch war es nicht bekannt, aus einer Matrix automatisch Nachrichten zwischen den beteiligten Partnern zu erzeugen. Diese Nachrichten sind bei der Erfindung Bestandteil der Prozessbeschreibung, die automatisch in einen Quellcode umgesetzt wird.

Vorzugsweise umfasst die Matrix zumindest drei Typen von Aktionen, wobei ein erster Typ von Aktionen eine nicht-kommunikative Handlung ausführt, ein zweiter Typ von Aktionen eine Aktion des ersten Typs mit Information versorgt, und ein dritter Typ von Aktionen von einer Aktion des ersten Typs eine Information erhält. Aus diesen Typen der Aktionen kann die Beziehung der einzelnen Aktionen,

Die Matrix umfasst zumindest drei Typen von Aktionen, die E-Aktion (Execute), bei welcher ein Subjekt eine Handlung ausführt, eine S-Aktion (Support), bei welcher ein Subjekt ein weiteres eine E-Aktion ausführendes Subjekt mit Informationen unterstützt, und eine I-Aktion (Information), bei welcher ein Subjekt von einem weiteren Subjekt, das eine E-Aktion ausführt, eine Information erhält. Im folgenden sind Paare von Subjekten definiert, zwischen welchen Nachrichten ausgetauscht werden, die alle automatisch erzeugt werden:
- E-Nachricht zwischen einem Subjekt, das eine E-Aktion in einer vorbestimmten Prozessphase ausführt, und einem Subjekt, das eine E-Aktion in einer nachfolgenden Phase ausführt;
- S-Nachricht zwischen einem Subjekt, das eine S-Aktion ausführt, und einem Subjekt, das in der gleichen Prozessphase die E-Aktion ausführt,
- I-Nachricht zwischen einem Subjekt, das eine E-Aktion ausführt, und einem Subjekt, das in der gleichen Prozessphase eine I-Aktion ausführt.

Diese Definition der Nachrichten stellen einen Satz Regeln zum Erzeugen von Nachrichten dar. Für alle Paare von Subjekten, die unter diese Regeln fallen, werden die entsprechenden Nachrichten erzeugt.

Zusätzlich können SR-Nachrichten erzeugt werden, welche von den Subjekten, die E-Aktionen ausführen und die von anderen Subjekten mit Informationen unterstützt werden, an diese anderen Subjekte gesendet werden, um die unterstützende Information anzufordern.

Innerhalb einer jeden Prozessphase werden die Nachrichten in der Reihenfolge S-Nachrichten, E-Nachrichten und I-Nachrichten sortiert, wobei falls SR-Nachrichten vorhanden sein sollten, diese zumindest vor den jeweiligen S-Nachrichten in die Reihenfolge eingefügt werden. Dies bedeutet, dass innerhalb einer Prozessphase zunächst alle Unterstützungsinformationen gesammelt werden, danach die Aktion ausgeführt wird und dann die mit der Aktion veränderten Informationen weitergegeben werden.

Vorzugsweise weist jede Prozessphase lediglich eine einzige E-Aktion auf. Hier ist nicht notwendig, dass jede Prozessphase eine I-Aktion und/oder eine S-Aktion aufweist. Es ist jedoch zweckmäßig, dass eine Prozessphase zumindest entweder eine S-Aktion oder eine I-Aktion aufweist. Aus der Blickrichtung der Ausführung bzw. der Simulation eines Prozesses kann eine E-Aktion auch dahingehend definiert werden, dass sie eine Aktion im Prozess durch Verändern einer Information darstellt bzw. abbildet. Das Verändern einer Information kann auch lediglich das Verschieben einer Information von einem Speicherort zu einem anderen Speicherort umfassen.

Beim automatischen Erzeugen des Quellcodes werden vorzugsweise Funktionen erzeugt, welche jeweils einem Subjekt zugeordnet sind, wobei die Funktionen zumindest drei unterschiedliche Funktionen umfassen, nämlich SENDEN, EMPFANGEN und TUN, wobei mit den Funktionen SENDEN und EMPFANGEN die ermittelten Nachrichten zwischen den Subjekten ausgetauscht werden. Mit der Funktion TUN werden die E-Aktionen im Quellcode dargestellt.

Die Funktionen EMPFANGEN zum EMPFANGEN einer oder mehrerer S-Nachrichten werden im Quellcode vor der Funktion TUN und die Funktionen SENDEN zum SENDEN einer oder mehrerer I-Nachrichten nach der Funktion TUN angeordnet.

Vorzugsweise werden mehrere Quellcodedateien erzeugt, wobei eine Quellcodedatei jeweils einen durch eine Matrix definierten Prozessabschnitt oder alleine die Funktionen eines der Subjekte umfassen kann. Die mehreren Quellcodedateien sind mittels Nachrichten miteinander verknüpft. Hierbei ist es auch möglich, dass ein Subjekt mit mehreren Subjekten verknüpft ist, insbesondere, dass eine E-Aktion unterschiedliche Nachrichten an unterschiedliche Subjekte senden kann. Hierbei wird während des Ausführens oder der Simulation des Prozesses lediglich eine einzige dieser Nachrichten versendet, denn durch die Übermittlung einer Nachricht von einer E-Aktion auf eine weitere E-Aktion wird der Prozessablauf auf die weitere E-Aktion und damit auf eine andere Prozessphase übergeben. Dies bedeutet, dass falls eine E-Aktion über mehrere Nachrichten mit mehreren weiteren E-Aktionen verknüpft ist, eine solche Verzweigung eine Entscheidung voraussetzt, die typischerweise in Abhängigkeit eines Parameters, der beispielsweise mittels einer S-Aktion der E-Aktion zugeführt wird, ausgeführt wird. D.h., in Abhängigkeit dieses Parameters wird entschieden, welche der unterschiedlichen Nachrichten abgesandt wird.

Wenn für ein jedes Subjekt eine separate Quellcodedatei erzeugt wird, dann sind die einzelnen Quellcodedateien sehr einfach ausgebildet und weisen eine ähnliche Struktur auf. Die Quellcodedateien der einzelnen Subjekte kommunizieren mittels Nachrichten miteinander. Es hat sich gezeigt, dass selbst bei komplexen Prozessen jedes einzelne Subjekt mit einer relativ geringen Anzahl weiterer Subjekte verknüpft ist, so dass die Komplexität der einzelnen Quellcodedateien sehr gering ist. Wird für ein jedes Subjekt eine separate Quellcodedatei erzeugt, dann entspricht der Schritt zum automatischen Erzeugen eines Quellcodes dem aus der EP 1 589 416 A2 bekannten Verfahren.

Wird für den Prozessabschnitt einer Matrix eine separate Quellcodedatei erzeugt, dann entspricht das Verfahren in etwa dem aus der Europäischen Patentanmeldung EP 12 151 052.3 beschriebenen Verfahren, wobei sich das erfindungsgemäße Verfahren von diesem Verfahren dadurch unterscheidet, dass nur die aus der Matrix ableitbaren Nachrichten im Quellcode erzeugt werden und nicht alle möglichen Nachrichten zwischen denen im Prozess vorhandenen Subjekten.

Es ist auch möglich, dass in einem Prozess eine oder mehrere Quellcodedateien erzeugt werden, die lediglich ein einziges Subjekt darstellen und eine oder mehrere Quellcodedateien erzeugt werden, die jeweils den gesamten Prozessabschnitt einer Matrix darstellen. Dies ist dann vor allem zweckmäßig, wenn die Prozessbeschreibung eine oder mehrere Matrizen und von den Matrizen unabhängig dargestellte Subjekte aufweist.

Mit der Funktion TUN können unterschiedliche vorbestimmte Programmabschnitte ausgeführt werden. Hierzu kann das System eine Bibliothek von Programmabschnitten aufweisen, wobei die einzelnen Funktionen TUN im Quellcode dann lediglich einen Verweis auf diese Programmabschnitte beinhalten, mit welchen diese dann beim Ausführen des Prozesses bzw. der Simulation aufgerufen werden. Es ist auch möglich, dass auch externe, insbesondere bereits kompilierte Computerprogramme aufgerufen und in den Prozess eingebunden werden.

Die E-Aktion, S-Aktion und I-Aktion können auch anders bezeichnet werden. Wesentlich ist, dass in jeder Prozessphase eine Aktion vorgesehen ist, die eine bestimmte Handlung ausführt und weitere Aktionen vorgesehen sein können, die die Handlung ausführende Aktion mit Information versorgen bzw. von der die Handlung ausführende Aktion eine Information erhalten. Der Begriff "Handlung" umfasst jegliche Tätigkeit eines Subjektes, wobei hiervon das Senden und Empfangen ausgenommen sind. Der Begriff "Handlung" bezieht sich daher vor allem auf nicht kommunikative Tätigkeiten.

Die Erfindung wird nachfolgend beispielhaft näher anhand der Zeichnungen erläutert. Die Zeichnungen zeigen:
- Figur 1: schematisch einen Prozess in einem Blockschaltbild mit drei Teilprozessen,
- Figur 2: einen ersten Teilprozess aus Figur 1 Subjekt-Prozessphasen-Matrix (S-PM),
- Figur 3: einen zweiten Teilprozess in einer Subjekt-Prozessphasen-Matrix (S-PM),
- Figur 4: ein Kommunikationsdiagramm des ersten Teilprozesses aus Figur 1,
- Figur 5: ein Subjektverhaltensdiagramm eines Subjektes während zweier Prozessphasen,
- Figur 6: ein Subjektkommunikationsdiagramm des zweiten Teilprozesses Figur 1,
- Figur 7: ein Verfahren zum automatischen Erzeugen eines Quellcodes aus zumindest einer S-PM, und
- Figur 8: schematisch ein Blockschaltbild eines Systems zum Erzeugen eines Quellcodes für ein Computerprogramm.

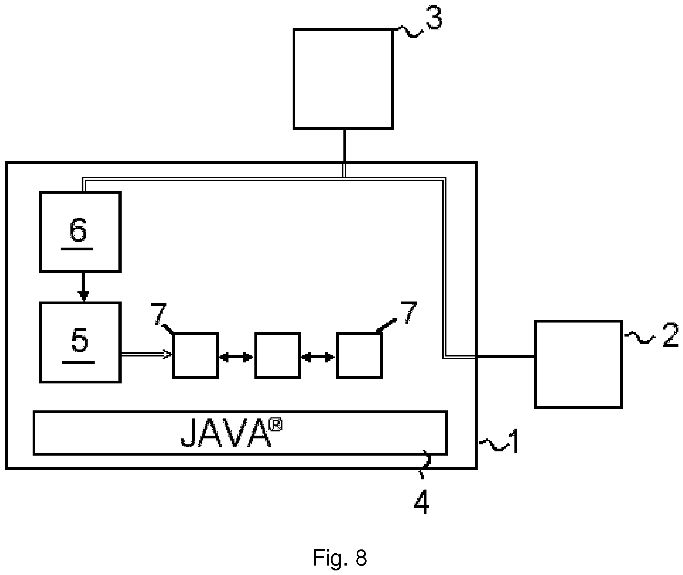

Figur 8 zeigt schematisch in einem Blockschaltbild ein System zum Erzeugen eines Quellcodes für ein Computerprogramm zur Ausführung bzw. Simulation eines Prozesses. Das System umfasst ein Computersystem 1, das im Sinne der vorliegenden Erfindung ein einzelner Computer als auch ein Netzwerk umfasst und eine Vielzahl von Computern sein kann. Das Computersystem 1 weist zumindest eine Eingabeeinrichtung 2, umfassend eine Tastatur und eine Computermaus, sowie eine Ausgabeeinrichtung 3 auf. Die Ausgabeeinrichtung ist typischerweise ein Monitor oder Beamer. Im Computersystem 1 ist eine Java^{®}-Plattform 4 vorgesehen.

Das System weist einen Quellcodegenerator 5 und einen Matrizengenerator 6 auf. Der Matrizengenerator 6 ist ein Computerprogramm, das zur Erzeugung einer Subjekt-Prozessphasen-Matrix (S-PM) dient, die in einer Prozessdatei abgespeichert wird. Der Quellcodegenerator ist ein weiteres Programm, das zur automatischen Erzeugung eines Quellcodes 7 aus der Prozessdatei oder aus mehreren Prozessdateien ausgebildet ist.

Der Matrizengenerator 6 weist eine grafische Benutzerfläche auf, mit welcher eine S-PM erzeugt werden kann. Eine jede S-P-Matrix wird in einer separaten Prozessdatei gespeichert. Die Prozessdateien werden von dem Quellcodegenerator 5 gelesen und automatisch in Quellcode umgesetzt. Dies wird unten näher anhand von Figur 11 erläutert.

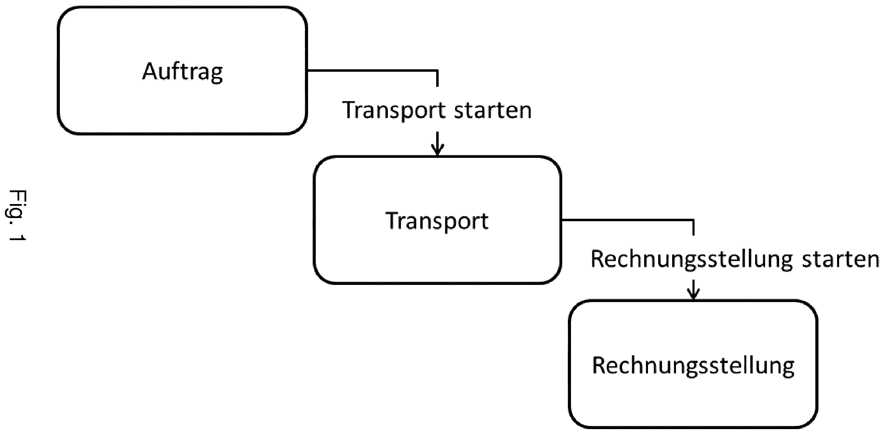

Die Erfindung wird nachfolgend anhand eines Prozessmanagementprojektes einer kleinen Transportfirma (Figur 1) erläutert. Dieser Prozess umfasst drei Teilprozesse, Auftragsbearbeitung (Order), Transport und Rechnungsstellung (Invoicing). Diese drei Teilprozesse werden aufeinanderfolgend ausgeführt.

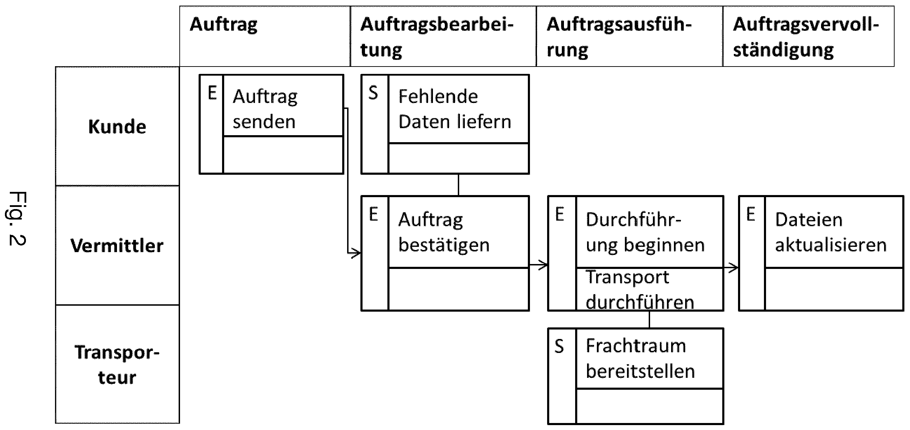

Die Ausführungslogik eines jeden dieser Teilprozesse kann mit einer Subjekt-Prozessphasen-Matrix (S-PM) dargestellt werden. Figur 2 zeigt die S-PM des ersten Teilprozesses aus Figur 1. In der S-PM sind in der am linken Rand angeordneten Spalte Subjekte aufgeführt, die an dem Teilprozess teilnehmen. Die Subjekte sind Kunde (Customer), Vermittler (Forwarding agent) und Transporteur (Carrier). In der ersten Zeile sind die einzelnen Prozessphasen Auftrag (Order), Auftragsbearbeitung (Handle order), Auftragsausführung (Execute order) und Auftragsvervollständigung (Update order scheduling) aufgeführt.

In der S-PM sind die einzelnen Subjekte mit einer oder mehreren Prozessphasen mittels Aktionen verknüpft, d.h. dass in der Matrix in der Zeile des jeweiligen Subjektes eine Aktion in der Spalte der Prozessphase eingetragen ist, in der diese Aktion ausgeführt wird. Das vorliegende Ausführungsbeispiel umfasst drei Typen von Aktionen, die E-Aktion (**E**xecute), bei welcher das jeweilige Subjekt eine Handlung ausführt, eine S-Aktion (**S**upport), bei welcher das jeweilige Subjekt eine E-Aktion in dieser Prozessphase das ausführende Subjekt mit Information unterstützt, und eine I-Aktion (Information), bei welcher ein Subjekt von einem weiteren Subjekt, das eine E-Aktion ausführt, eine Information erhält.

Der Prozessablauf geht grundsätzlich von einer E-Aktion einer Prozessphase auf eine E-Aktion der nachfolgenden Prozessphase über. Dies ist in der S-PM durch einen entsprechenden Pfeil zwischen den jeweiligen E-Aktionen dargestellt. Zusätzlich ist es möglich, dass ein Prozessablauf nach dem Ausführen einer E-Aktion auch verzweigen kann. In diesem Fall gibt es zumindest einen zweiten Pfeil am Ausgang einer E-Aktion (in der S-PM auf der rechten Seite des E-Aktion darstellenden Kästchens) ein zusätzlichen Pfeil, der zum Eingang (linke Seite des Kästchens, das die E-Aktion darstellt), einer weiteren E-Aktion führt, die nicht in der nachfolgenden Prozessphase angeordnet ist. Eine solche Verzweigung kann zu einer vorhergehenden E-Aktion als auch zu einer in der übernächsten oder noch später angeordneten Prozessphase der angeordneten E-Aktion führen.

Die einzelnen Aktionen sind jeweils mit einem Kästchen in der S-PM eingetragen, wobei jedes Kästchen in drei Teilkästchen unterteilt ist. Eines der Teilkästchen ist am linken Rand angeordnet, in dem jeweils der Buchstabe "E" bzw. "S" bzw. "I" für die drei Typen von Aktionen, nämlich E-Aktion, S-Aktion und I-Aktion, kennzeichnet. Rechts daneben sind ein oberes und ein unteres Kästchen vorgesehen, wobei im oberen Kästchen der Name der jeweiligen Aktion eingetragen ist und im unteren Kästchen ein Verknüpfung zu einem anderen Teilprozess eingetragen sein kann. Hierzu wird in dieses untere Kästchen der Name des anderen Teilprozesses eingetragen (z.B. "Execute Transport" in der E-Aktion der Prozessphase "Execute order", womit der Prozessablauf auf den zweiten Teilprozess übergeht).

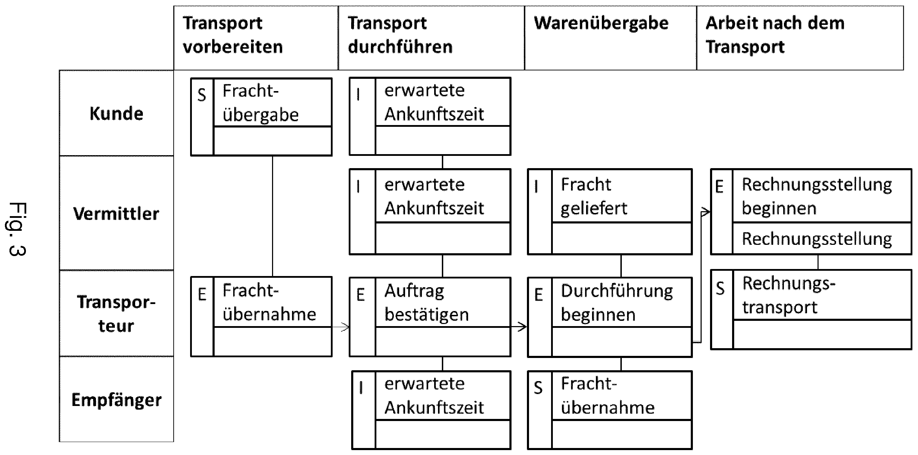

Die S-Aktionen einer Prozessphase versorgen das Subjekt, das die E-Aktion ausführt, mit einer Information. Dementsprechend sind diese Aktionen in der S-PM mit einem Strich verbunden. Die I-Aktionen eines bestimmten Subjektes bedeuten, dass dieses Subjekt von der E-Aktion in derselben Prozessphase, in der die I-Aktion angeordnet ist, mit Information versorgt wird. Dementsprechend sind auch die I-Aktionen mit der E-Aktion derselben Prozessphase mit einem Strich verbunden (Figur 3).

Bei der S-PM gemäß Figur 2 führt lediglich der Kunde eine E-Aktion während der ersten Prozessphase "Auftrag" aus, bei der er einen Auftrag an den Vermittler sendet. In der darauffolgenden Prozessphase "Auftragsbearbeitung" bearbeitet der Vermittler den eingehenden Auftrag, wobei er fehlende Daten vom Kunden anfordert, die ihm mit einer entsprechenden S-Aktion überreicht werden. In der darauffolgenden Prozessphase veranlasst der Vermittler mit einer E-Aktion die Ausführung des Auftrages, wobei er vom Transporteur den zur Verfügung stehenden Transportraum abfragt. Der Transporteur überreicht diese Information mit einer S-Aktion an den Vermittler. In der Prozessphase Auftragsvervollständigung stellt der Vermittler alle relevanten Auftragsdaten zur Ausführung des Auftrages zusammen.

Dieses Beispiel einer S-PM des Teilprozesses gemäß Figur 2 zeigt, dass der Prozessablauf von der jeweiligen E-Aktion auf die E-Aktion der folgenden Prozessphase übergeht, wobei innerhalb der einzelnen Prozessphasen die E-Aktionen, die jeweils von einem bestimmten Subjekt ausgeführt werden, durch Informationen von anderen Subjekten unterstützt werden können (S-Aktion).

Figur 3 zeigt die S-PM des zweiten Teilprozesses aus Figur 1 (Transport). In dieser S-PM sind wiederum in jeder Prozessphase jeweils eine E-Aktion vorgesehen, wobei einzelne Prozessphasen auch S-Aktionen und I-Aktionen aufweisen. Mit I-Aktionen werden die jeweiligen Subjekte der Zeile der S-PM, in der die I- Aktion angeordnet ist, von der E- Aktion der gleichen Prozessphase mit Information versorgt. Deshalb sind die entsprechenden I-Aktionen mit der jeweiligen E- Aktion mit Linien verbunden.

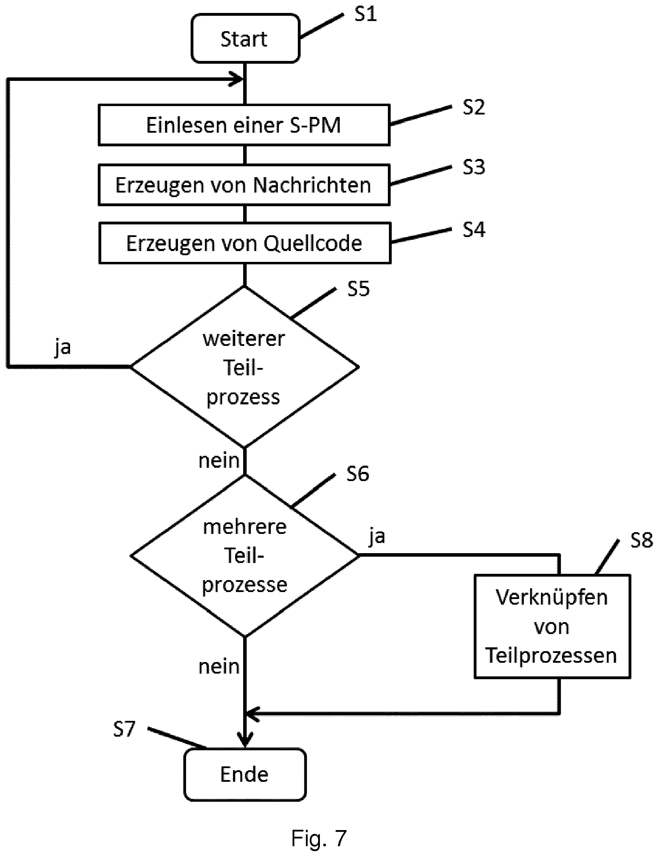

Grundsätzlich ist es möglich, einen gesamten Prozess in einer einzigen S-PM darzustellen. Praktisch ist dies jedoch wenig sinnvoll, da bei einem umfangreicheren Prozess die S-PM sehr unübersichtlich werden würde. Deshalb ist es zweckmäßig einen Prozess in mehrere Teilprozesse zu unterteilen, wobei jeder Teilprozess in einer separaten S-PM dargestellt wird. Aus den S-PMs der einzelnen Teilprozesse werden automatisch ein Quellcode erzeugt. Das Verfahren zum Erzeugen eines Quellcodes beginnt mit dem Schritt S1 (Figur 7).

Im Schritt S2 wird zunächst eine erste S-PM eingelesen.

Danach werden automatisch Nachrichten zwischen einzelnen Subjekten der S-PM erzeugt (Schritt S3). Die Nachrichten werden nach vorbestimmten Regeln erzeugt. Im vorliegenden Ausführungsbeispiel werden Nachrichten gemäß folgender Definitionen erzeugt:
- E-Nachricht zwischen einem Subjekt, das eine E-Aktion einer vorbestimmten Prozessphase ausführt, und einem Subjekt, das eine E-Aktion in einer nachfolgenden Prozessphase ausführt,
- SR-Nachricht zwischen einem Subjekt, das eine E-Aktion ausführt und das von einem anderen Subjekt mit Informationen unterstützt wird, die an dieses andere Subjekt geschickt wird, um die unterstützende Information anzufordern,
- S-Nachricht zwischen einem Subjekt, das eine S-Aktion ausführt, und einem Subjekt, das in der gleichen Prozessphase die E-Aktion ausführt, und
- I-Nachricht zwischen einem Subjekt, das eine E-Aktion ausführt, und einem Subjekt, das in der gleichen Prozessphase eine I-Aktion ausführt.

Die oben definierten Nachrichten zwischen zwei Subjekten sind somit eindeutig durch die jeweilige Aktion(en) definiert. Im Schritt S3 werden all diese Nachrichten automatisch erzeugt.

Die Nachrichten können automatisch mit einer Bezeichnung versehen werden. Im vorliegenden Ausführungsbeispiel werden die einzelnen Nachrichten mit folgenden Namen bezeichnet:

| | |
|---|---|
| E-Nachricht: | "E-Name-der-folgenden-Phase" |
| SR-Nachricht: | "S-Name-der-Phase?" |
| S-Nachricht: | "Name-der-Phase-S!" |
| I-Nachricht: | "I-Name-der-Phase" |

Weiterhin werden Nachrichten zum Verknüpfen von Teilprozessen automatisch erzeugt, wenn eine solche Verknüpfung in der Matrix definiert ist. Das Subjekt, das eine solche verknüpfte Aktion ausführt (z.B. Vermittler in Fig. 2) sendet eine Nachricht an die E-Aktion in der ersten Prozessphase des verknüpften Teilprozesses bzw. der verknüpften S-PM.

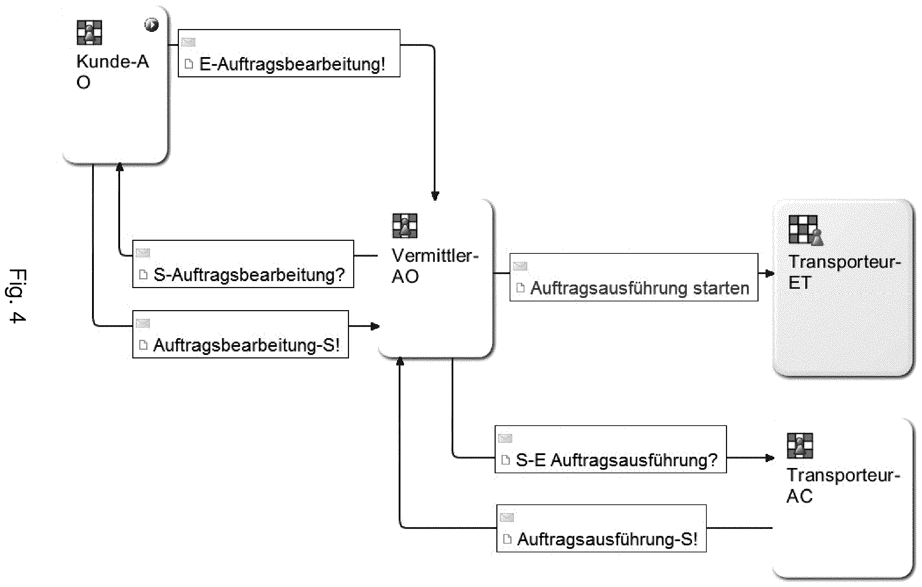

Figur 4 zeigt ein Subjektkommunikationsdiagramm des ersten Teilprozesses aus Figur 1, in dem die Subjekte dieses Teilprozesses und die zwischen den Subjekten ausgetauschten Nachrichten dargestellt sind.

Die Nachrichten eines Teilprozesses werden in einer bestimmten Reihenfolge angeordnet. Innerhalb einer Prozessphase werden zunächst die SR-Nachrichten und nachfolgend die entsprechenden S-Nachrichten, dann die I-Nachrichten und danach die E-Nachrichten angeordnet. Die Gruppen von Nachrichten der jeweiligen Prozessphasen werden entsprechend der Prozessphase in der S-PM aufeinanderfolgend sortiert. Die S-Nachrichten können unmittelbar nach den entsprechenden SR-Nachrichten folgen. Es ist jedoch auch möglich, dass zunächst mehrere SR-Nachrichten ausgeführt werden und danach erst die entsprechenden S-Nachrichten ausgeführt werden.

Die Nachricht "START EXECUTE TRANSPORT" in Figur 4 wird vom Vermittler des ersten Teilprozesses an den Transporteur des zweiten Teilprozesses gesandt. Diese "Verknüpfungsnachricht" wird auf Grundlage der in der S-PM in Figur 2 eingetragenen Verknüpfung in der E-Aktion der Prozessphase "Execute Order" erzeugt. Durch Senden dieser Nachricht wird der Prozessablauf von dem ersten Teilproress auf den zweiten Teilprozess übertragen.

Im Schritt S4 wird anhand der Nachrichten und der Subjekte, zwischen welchen die Nachrichten ausgetauscht werden, der Quellcode erzeugt.

Beim automatischen Erzeugen des Quellcodes werden Funktionen erzeugt, welche jeweils einem Subjekt zugeordnet sind, wobei die Funktionen drei unterschiedliche Funktionen umfassen, nämlich SENDEN; EMPFANGEN und TUN, wobei mit den Funktionen SENDEN und EMPFANGEN die ermittelten Nachrichten zwischen Subjekten ausgetauscht werden. Mit der Funktion TUN werden die E-Aktionen im Quellcode dargestellt.

Eine jede Nachricht wird somit durch zwei Funktionen im Quellcode dargestellt, wobei die eine Funktion SENDEN von dem die jeweilige Nachricht sendenden Subjekt ausgeführt wird und die Funktion EMPFANGEN von dem die jeweilige Nachricht empfangenden Subjekt ausgeführt wird. Die Reihenfolge der Funktionen SENDEN und EMPFANGEN im Quellcode ist selbstverständlich so, dass zuerst die Funktion SENDEN und dann die Funktion EMPFANGEN ausgeführt wird. Die einzelnen Nachrichten werden durch die Funktionen SENDEN und EMPFANGEN in der vorsortierten Reihenfolge in den Quellcode umgesetzt.

Die Funktion TUN, mit welcher die E-Aktionen im Quellcode dargestellt werden, werden im Quellcode nach dem Ausführen der Funktionen zum Darstellen der SR-Nachrichten und S-Nachrichten und vor dem Ausführen der I-Nachrichten innerhalb der jeweiligen Prozessphase angeordnet. Nach den Funktionen zum Ausführen der I-Nachrichten werden die Funktionen zum Ausführen der E-Nachricht der jeweiligen Prozessphase angeordnet.

Der Quellcode einer Prozessphase definiert somit zunächst die SR-Nachrichten und S-Nachrichten, danach die Funktion TUN, danach die I-Nachrichten und danach die E-Nachricht(en).

Diese Reihenfolge wiederholt sich für die einzelnen Prozessphasen in einem jeden Teilprozess.

Nach dem Erzeugen des Quellcodes für einen Teilprozess wird im Schritt S5 geprüft, ob weitere Teilprozesse vorhanden sind. Ist dies der Fall, dann verzweigt der Verfahrensablauf auf den Schritt S2 und mit den Schritten S2, S3 und S4 wird weiterer Quellcode für den weiteren Teilprozess erzeugt.

Falls im Schritt S5 festgestellt wird, dass keine weiteren Teilprozesse vorhanden sind, geht der Verfahrensablauf auf den Schritt S6 über, in dem geprüft wird, ob Quellcode von mehreren Teilprozessen vorliegt. Ist dies nicht der Fall, dann bedeutet dies, dass lediglich für eine S-PM Quellcode erzeugt worden ist. Der Verfahrensablauf kann dann direkt mit dem Schritt S7 beendet werden.

Wurden jedoch mehrere Teilprozesse in Quellcode umgesetzt, so geht der Verfahrensablauf vom Schritt S6 auf den Schritt S8 über, in dem der Quellcode der einzelnen Teilprozesse miteinander verknüpft wird.

Die Verknüpfung des Quellcodes der einzelnen Teilprozesse erfolgt durch die oben erläuterten Verknüpfungsnachrichten, die in einer Aktion, insbesondere einer E-Aktion, eines bestimmten Teilprozesses definiert sind und auf einen anderen Teilprozess verzweigen, wobei die Verknüpfungsnachricht an die E-Aktion der ersten Prozessphase des anderen Teilprozess gesandt wird. Typischerweise erfolgt die Verknüpfung durch Übermitteln einer Nachricht von der E-Aktion und der letzten Prozessphase eines Teilprozesses zur E-Aktion der ersten Prozessphase des nachfolgenden Teilprozesses. So können Teilprozesse aufeinanderfolgend miteinander verknüpft werden.

Grundsätzlich ist es jedoch auch möglich, dass E-Aktionen einer beliebigen Prozessphase eines vorhergehenden Teilprozesses mit einer E-Aktion einer beliebigen Prozessphase eines nachfolgenden Teilprozesses verknüpft werden. Dies tritt vor allem dann auf, wenn der Prozessablauf innerhalb eines Teilprozesses verzweigt wird, so dass von einer E-Aktion einerseits der Prozessablauf auf die E-Aktion der nachfolgenden Prozessphase übergeht und andererseits der Prozessablauf auf eine beliebige E-Aktion, die auch eine E-Aktion eines anderen Teilprozesses sein kann, übertragen wird. Derartige Verzweigungen sind in der S-PM zu kennzeichnen. Die Nachrichten zur Verknüpfung von Quellcode unterschiedlicher Teilprozesse können auch automatisch aus einem übergeordneten Prozess, wie es z.B. in Figur 1 dargestellt ist, erzeugt werden. Aus diesem Prozessdiagramm geht klar hervor, welche Teilprozesse wie miteinander verknüpft sind, so dass automatisch zwischen der E-Aktion die letzte Prozessphase des vorhergehenden Teilprozesses und der E-Aktion der ersten Prozessphase des nachfolgenden Teilprozesses eine entsprechende Nachricht erzeugt werden kann.

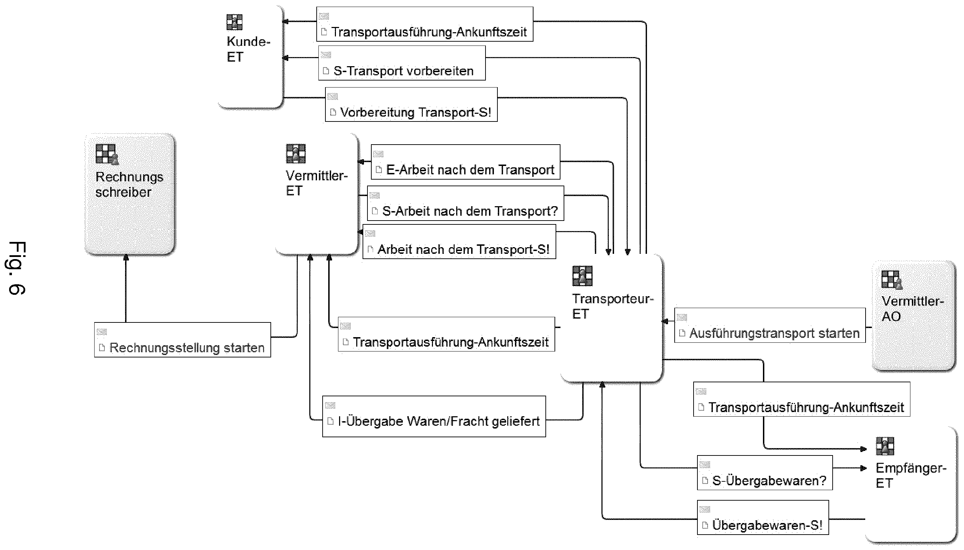

Zum Verknüpfen des Quellcodes unterschiedlicher Teilprozesse werden die Subjekte eines jeden Teilprozesses durch einen Zusatz als zu dem jeweiligen Teilprozess gehörend gekennzeichnet. Figur 4 zeigt den Teilprozess der Auftragsbearbeitung in einem Subjektkommunikationsdiagramm an, wobei die Subjekte des Teilprozesses mit dem Zusatz "AO" gekennzeichnet sind. Die Subjekte des zweiten Teilprozesses dieses Beispiels sind mit dem Zusatz "ET" gekennzeichnet (Figur 6). Diese Zusätze ("AO" bzw. "ET") bezeichnen jeweils die Teilprozesse ("Order" bzw. "Transport"). Somit kann eine Verknüpfung zwischen zwei Teilprozessen eindeutig definiert werden, selbst wenn die Teilprozesse dieselben Subjekte enthalten.

Die Verknüpfung des Quellcodes der einzelnen Teilprozesse kann auch dadurch erfolgen, dass die gleichen Subjekte unterschiedlicher Teilprozesse aufeinander gemappt werden.

Hierbei werden beim Verknüpfen nicht zusätzliche Nachrichten erzeugt, sondern bestehende Nachrichten einem Quellcode eines weiteren Teilprozesses übermittelt, indem die an sich gleichen Subjekte der unterschiedlichen Teilprozesse miteinander ausgetauscht bzw. aufeinander gemappt werden.

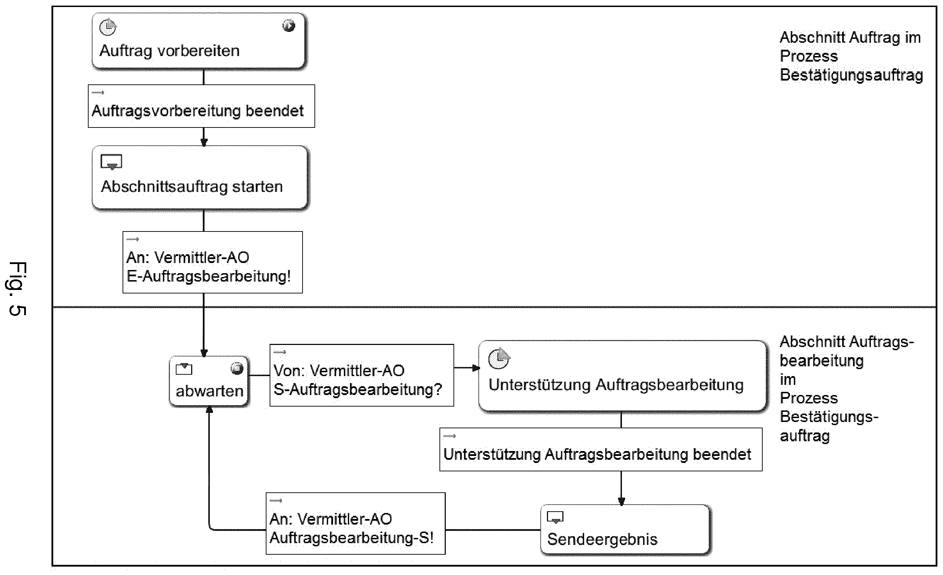

Figur 5 zeigt ein Subjektverhaltensdiagramm des Subjektes Kunde (customer) des ersten Teilprozesses gemäß Figur 1 während der zwei Prozessphasen Auftrag und Auftragsbearbeitung. Der Matrizengenerator 6 kann mit einer Zusatzfunktion ausgebildet sein, mit welcher derartige Subjektverhaltensdiagramme automatisch aus der S-PM erzeugt werden. An diesen Subjektverhaltensdiagrammen kann der Benutzer erkennen, wie sich die einzelnen Subjekte verhalten, das heißt, welche Tätigkeiten sie ausführen. Es kann auch vorgesehen sein, dass der Benutzer in einem solchen Subjektverhaltensdiagramm weitere Ergänzung vornimmt, die dann in der Prozessdatei gespeichert werden, und vom Quellcodegenerator 5 in Quellcode umgesetzt werden. Hierbei können z.B. Refinements hinzugefügt werden. Refinements sind vorbestimmte Programmabschnitte, die in den Prozess eingebunden werden. Vorzugsweise werden sie mit einer E-Aktion verknüpft, so dass die Refinements im Quellcode innerhalb einer TUN-Funktion ausgeführt werden. Die Refinements können Quellcodeabschnitte sein. Sie können jedoch auch bereits kompilierte Programmabschnitte sein. Als Refinements werden vor allem Programmabschnitte bezeichnet, die von einer Quelle außerhalb des Systems stammen und in den Prozess eingebunden werden. Vorzugsweise weist das System auch eine Bibliothek von eigenen Programmabschnitten in Form von Quellcode oder kompilierten Computercode auf, die in den Prozess eingebunden werden. Das Einbinden derartiger Programmausschnitte ist grundsätzlich auch innerhalb einer S-PM möglich.

Auch die Kommunikationsdiagramme gemäß Figur 4 und Figur 6 können mittels einer Zusatzfunktion vom Matrizen-Manager automatisch erzeugt werden. In den Kommunikationsdiagrammen werden alle automatisch erzeugten Nachrichten dargestellt. Falls der Matrizen-Manager zum Erzeugen von den Kommunikationsdiagrammen ausgebildet ist, dann wird der Verfahrensschritt des automatischen Erzeugens der Nachrichten zwischen den Subjekten vom Matrizen-Manager ausgeführt. Ansonsten besteht auch die Möglichkeit, die Nachrichten vom Prozessgenerator bei der Erzeugung des Quellcodes erzeugen zu lassen. Der Benutzer kann auch in der Darstellung des Kommunikationsdiagrammes Änderungen vornehmen, insbesondere den Austausch von Nachrichten korrigieren bzw. durch zusätzliche Nachrichten ergänzen.

Mit der vorliegenden Erfindung kann somit der Quellcode automatisch aus einer S-PM erzeugt werden. Im Rahmen der Erfindung ist es jedoch auch möglich automatisch weitere spezielle Diagramme zu erzeugen, in welchen der Benutzer den Prozess verfeinern kann. All diese Informationen werden in der Prozessdatei gespeichert, um sie dann automatisch in Quellcode umzusetzen.

Der Prozessgenerator ist derart ausgebildet, dass der Benutzer des Systems lediglich im Matrizen-Manager Änderungen und Ergänzungen an der S-PM bzw. an einzelnen Subjekten ausführen kann. Der Benutzer schreibt keinerlei Computercode. Am Ende der Modellierung des Prozesses anhand der S-PM erfolgt eine Speicherung, wobei eine Prozessbeschreibung in einer Metasprache in eine oder mehrere Prozessdateien gespeichert wird.

Diese Prozessbeschreibung in der Metasprache wird vom Quellcodegenerator automatisch in einen Quellcode umgesetzt. Dieser Quellcode kann entweder direkt mittels eines Interpreters ausgeführt werden oder mittels eines Compilers in einen ausführbaren Maschinencode umgesetzt werden.

Der Quellcodegenerator kann bei Verwendung eines Interpreters auch in den Matrizen-Generator integriert werden, wobei die Prozessbeschreibung in der Metasprache so weit für den Interpreter präzisiert wird, dass sie unmittelbar durch den Interpreter ausführbar ist. Es wird jedoch die Ausführungsform mit separatem Quellcodegenerator bevorzugt, wobei vorzugsweise für eine jede S-PM ein separater Quellcode erzeugt wird. Hierdurch können unterschiedliche Prozessabschnitte auf unterschiedlichen Computern zur Ausführung gebracht werden, wobei die Computer über ein Datennetzwerk miteinander verbunden sind, so dass Subjekte der unterschiedlichen Prozessabschnitte miteinander Nachrichten austauschen können.

Vorzugsweise wird auch für eine jede S-PM eine separate Prozessdatei erzeugt. Die Prozessdatei enthält einen Namen, der vom Namen der S-PM abgeleitet ist. Die Prozessdatei kann auch Angaben zu dem Computer enthalten, an dem der Prozessabschnitt zur Ausführung gebracht werden soll, mit statischer oder dynamischer IP-Adresse, gegebenenfalls die IP-Adresse eines Servers, optionalen Angaben, wie den Namen des Entwicklers und der Version. Es kann auch zweckmäßig sein, interne und externe Subjekte vorzusehen, wobei interne Subjekte lediglich mit weiteren Subjekten innerhalb des Prozessabschnittes kommunizieren können und externe Subjekte mit anderen externen Subjekten anderer Prozessabschnitte kommunizieren können. Die externen Subjekte können somit Befehle zum externen Austausch von Nachrichten, d.h. über die Grenzen der Prozessabschnitte hinweg, enthalten. Selbstverständlich können die externen Subjekte auch mit den internen Subjekten des eigenen Prozessabschnittes kommunizieren.

Ein Prozess kann somit modular aus vielen Prozessabschnitten erzeugt werden. Einzelne Prozessabschnitte können auch innerhalb eines Prozesses einfach ausgetauscht werden. Mit dem Matrizen-Manager können der Austausch von Nachrichten zwischen den Subjekten unterschiedlicher Prozessabschnitte festgelegt werden. Hierdurch werden unterschiedliche Prozessabschnitte miteinander verbunden. Die einzelnen Prozessabschnitte können mit dem erfindungsgemäßen System und dem erfindungsgemäßen Verfahren sehr schnell, einfach und zuverlässig erzeugt werden. Weiterhin können zum Empfangen von Nachrichten durch Subjekte Eingabepuffer, die auch als Input-Pools bezeichnet werden, vorgesehen sein, wie sie bereits aus der US 7,861,221 bekannt sind. Diese Input-Pools bzw. Eingabepuffer können in ihrer Empfangskapazität eingestellt werden. Der Vorgabewert beträgt in der Regel 1000 Nachrichten. Weiterhin können zusätzliche Input-Pool-Restriktionen festgelegt werden, wie zum Beispiel, dass für bestimmte Sender bzw. bestimmte Nachrichtentypen vorbestimmte Empfangskapazitäten reserviert werden. Hierdurch wird für einen jeden Sender bzw. einen jeden Nachrichtentyp eine separate Empfangskapazität im Input-Pool reserviert. Diese Empfangskapazitäten bilden somit voneinander unabhängige Partitionen des Input-Pools. Dadurch ist sichergestellt, dass ein bestimmter Sender den Input-Pool nicht alleine vollständig füllen kann, sondern für bestimmte Sender bzw. bestimmte Nachrichtentypen eine vorbestimmte Partition unabhängig vom Nachrichtenaufkommen anderer Sender zur Verfügung steht.

Das Empfangen von Nachrichten wird mittels eines nicht-aktiven Wartens auf die entsprechende Nachricht ausgeführt. Das nicht-aktive Warten beruht auf dem sogenannten Monitor-Konzept, das bereits im Oktober 1974 von Hoare C. A. R. in dem Artikel "Monitors: An operating system structuring concept" in Commun. ACM 17, 10 beschrieben ist. Vereinfacht kann dieses Monitor-Konzept als eine Verschiebung der Warte-Funktion von einer Programmebene in die Betriebssystemebene bzw. Prozess-Ebene dargestellt werden. Wesentlich ist, dass durch dieses Monitor-Konzept verhindert wird, dass eine Vielzahl von Tasks in einem Multitask-System gleichzeitig aktiv sind und immer wieder Prozessorleistungen zum Ausführen des Wartens beanspruchen. Durch dieses Monitor-Konzept wird das Warten von einer Vielzahl von Tasks von lediglich einer einzigen Betriebssystem-Task überwacht. Dieses Monitor-Konzept erlaubt auf einfache Art und Weise, dass eine Vielzahl von Programmen bzw. Tasks parallel nebeneinander ablaufen und auf Daten von einer jeweils anderen Task bzw. einem jeweils anderen Programm warten, ohne dass hierdurch die Prozessorleistung nennenswert beeinträchtigt wird. In JAVA ist das Monitor-Konzept durch die Methoden "Notify", "NotifyAll" und "Wait" implementiert.

Der Quellcode kann in der vorliegenden Erfindung so wie in der US 7,861, 221 aus der Prozessdatei erzeugt werden, wobei sich die vorliegende Erfindung von diesem bekannten Verfahren jedoch dadurch unterscheidet, dass nicht für ein jedes Subjekt ein separater Quellcode erzeugt wird, sondern dass für eine jede S-PM, die ein oder mehrere Subjekte umfasst, jeweils ein separater Quellcode erzeugt wird. Vorzugsweise wird für einen jeden durch eine S-PM dargestellten Prozessabschnitt eine JA-VA^{®}-Klasse angelegt. Dieser JAVA^{®}-Klasse werden Methoden einer vorprogrammierten Standardklasse vererbt, die durch eine Reihe von Methoden ergänzt ist. Eine entsprechende Quellcodedatei wird initialisiert, d.h., dass eine Methode zur Initialisierung der Klasse in den Quellcode geschrieben wird. Diese Methode wird in JAVA^{®} als Konstruktor bezeichnet. In diesem Konstruktor werden der Prozessdatei-Name und eine Cluster-ID eingetragen. In den Quellcode wird die eine JAVA^{®}-Methode "Main" eingetragen. In dieser Main-Methode ist ein Aufruf einer Run-Methode enthalten, die von einer vorprogrammierten Standardklasse ererbt worden ist. Optional können auch Methodenaufrufe für Refinement-Funktionen im Quellcode eingetragen werden.

Dieser Quellcode kann dann entweder von einem Interpreter interpretiert oder von einem Compiler kompiliert werden.

## Patentansprüche

1. Verfahren zum Erzeugen eines Quellcodes für ein Computerprogramm zur Ausführung bzw. Simulation eines Prozesses, umfassend die folgenden Schritte:
- Analysieren einer Prozessbeschreibung, in welcher ein Prozess in Form zumindest einer Matrix dargestellt ist, wobei in der Matrix Subjekte und Prozessphasen mit Aktionen derart verknüpft sind, dass durch die Matrix bestimmt ist, welche Aktionen in den jeweiligen Prozessphasen von welchem Subjekt ausgeführt werden, wobei anhand vorbestimmter Regeln beim Analysieren Nachrichten erzeugt werden, die zwischen den Subjekten ausgetauscht werden,
- automatisches Erzeugen eines Quellcodes anhand der in der Matrix enthaltenen Informationen zu den Subjekten und den Aktionen und anhand der mit dem Analysieren ermittelten Nachrichten, wobei die Matrix zumindest drei Typen von Aktionen umfasst, die E-Aktion (**E**xecute), bei welcher ein Subjekt eine Handlung ausführt, eine S-Aktion (**S**upport), bei welcher ein Subjekt ein weiteres eine E-Aktion ausführendes Subjekt mit Information unterstützt, und eine I-Aktion (Information), bei welcher ein Subjekt von einem weiteren Subjekt, das eine E-Aktion ausführt, eine Information erhält, wobei alle folgenden Nachrichten erzeugt werden:
- E-Nachricht zwischen einem Subjekt, das eine E-Aktion in einer vorbestimmten Prozessphase ausführt, und einem Subjekt, das eine E-Aktion in einer nachfolgenden Prozessphase ausführt;
- S-Nachricht zwischen einem Subjekt, das eine S-Aktion ausführt, und einem Subjekt, das in der gleichen Prozessphase die E-Aktion ausführt,
- I-Nachricht zwischen einem Subjekt, das eine E-Aktion ausführt, und einem Subjekt, das in der gleichen Prozessphase eine I-Aktion ausführt.

2. Verfahren nach Anspruch 1,
**dadurch gekennzeichnet,**
**dass** zusätzlich SR-Nachrichten erzeugt werden, welche von den Subjekten, die E-Aktionen oder nicht-kommunikative Aktionen ausführen und die von anderen Subjekten mit Information unterstützt werden, an diese anderen Subjekte gesendet werden, um die unterstützende Information anzufordern.

3. Verfahren nach Anspruch 1 oder 2,
**dadurch gekennzeichnet,**
**dass** innerhalb einer jeden Prozessphase die Nachrichten in der Reihenfolge S-Nachrichten, E-Nachricht und I-Nachricht sortiert werden, wobei falls SR-Nachrichten vorhanden sein sollten, diese zumindest vor den jeweiligen S-Nachrichten in die Reihenfolge eingefügt werden.

4. Verfahren nach einem der Ansprüche 1 bis 3,
**dadurch gekennzeichnet,**
**dass** beim automatischen Erzeugen des Quellcodes Funktionen erzeugt werden, welche jeweils einem Subjekt zugeordnet sind, wobei die Funktionen zumindest drei unterschiedliche Funktionen umfassen, nämlich SENDEN, EMPFANGEN und TUN, wobei mit den Funktionen SENDEN und EMPFANGEN die ermittelten Nachrichten zwischen den Subjekten ausgetauscht werden.

5. Verfahren nach Anspruch 3 in Verbindung mit Anspruch 4,
**dadurch gekennzeichnet,**
**dass** beim automatischen Erzeugen des Quellcodes E-Aktionen durch die Funktion TUN im Quellcode dargestellt werden, und innerhalb einer Prozessphase die Funktion(en) EMPFANGEN zum Empfangen einer oder mehrerer S-Nachrichten vor der Funktion TUN und die Funktion(en) SENDEN zum Senden einer oder mehrerer I-Nachrichten nach der Funktion TUN vorgesehen werden.

6. Verfahren nach einem der Ansprüche 1 bis 5,
**dadurch gekennzeichnet,**
**dass** mehrere Quellcodedateien erzeugt werden, wobei eine Quellcodedatei den Prozess einer Matrix oder die Funktionen eines der Subjekte umfasst, und die mehreren Quellcodedateien mittels Nachrichten miteinander verknüpft sind.

7. Verfahren nach Anspruch 5 oder 6,
**dadurch gekennzeichnet,**
**dass** mit der Funktion TUN unterschiedliche vorbestimmte Programmabschnitte ausgeführt werden können, die durch eine entsprechende Beschreibung in der Matrix festgelegt sind, wobei mit einem dieser Programmabschnitte auch vorbestimmte externe Computerprogramme aufgerufen und in den Prozess eingebunden werden können.

8. System zum Ausführen eines der Verfahren nach einem der Ansprüche 1 bis 7
**dadurch gekennzeichnet,**
**dass** das System ein Computersystem mit zumindest einer Eingabeeinrichtung und einer Ausgabeeinrichtung umfasst, auf dem eine Software zum Ausführen des Verfahrens nach einem der Ansprüche 1 bis 7 gespeichert ist.

9. System nach Anspruch 8,
**dadurch gekennzeichnet,**
**dass** das Computersystem ein Netzwerk mit mehreren Computern ist.

10. Datenträger, auf dem ein Computerprogramm gespeichert ist, das beim Laden in einen Computer ein Verfahren nach einem der Ansprüche 1 bis / ausführt.

## Claims

1. A method for generating a source code for a computer program for the execution or the simulation of a process comprising the following steps:
- the analysis of a process description, in which a process is constituted in the form of at least a matrix, wherein in the matrix subjects and phases of the process are associated with actions such that is determined by the matrix, which actions are executed in the respective phases of the process by which subject, wherein messages are being produced on the basis of predetermined rules that are exchanged between the subjects,
- the automatic generation of a source code based on the information contained in the matrix on the subjects and the actions and their raised on the messages determined by the analysing, wherein the matrix comprises at least three types of actions, the E-Action, execute, in which a subject performs an action, an S-action, support, in which a subject supports another subject which performs an E-action with information, and an I-action, information, in which a subject receives information from another subject which performs an E-action, wherein all of the following messages are generated:
- E-message between a subject that performs an E-action in a predetermined process stage, and a subject that performs an e-action in a subsequent phase of the process;
- S-message between a subject that performs an S-action, and a subject that performs the e-action in the same process stage,
- I-message between a subject that performs an E-action, and a subject that performs an I-action in the same process stage.

2. The method according to claim 1,
**characterized in that**
in addition SR messages are generated, which are sent by subjects which perform E-actions or non-communicative actions and which are supported with information by other subjects, to these other subjects so as to request the supporting information.

3. The method of claim 1 or 2,
**characterized in that**
within each phase of the process the messages are sorted in the order S-messages, E-message and I-message, whereby if SR messages should be present, they are inserted at least before the respective S-messages in the order.

4. A method according to any one of claims 1 to 3,
**characterized in that**
when automatically generating the source code functions are generated, which are each assigned to a subject, wherein the features comprise at least three different functions, namely SEND, RECEIVE and DO, wherein the determined messages are exchanged between the subjects with the functions SEND and RECEIVE.

5. A method according to claim 3 in conjunction with claim 4,
**characterized in that**
when automatically generating the source code E-Actions are constituted by the function DO in the source code, and
within a process phase the function(s) RECEIVE are provided to receive one or more S-messages prior to the function DO and the function(s) SEND are provided to send one or more I-messages subsequently to the function DO.

6. A method according to any one of claims 1 to 5,
**characterized in that**
a plurality of source code files are generated, wherein a source code file comprises the process of a matrix, or the functions of one of the subjects, and the plurality of source code files are linked to one another by messages.

7. The method of claim 5 or 6,
**characterized in that**
different predetermined program sections can be executed with the function DO, which are defined by a corresponding description in the matrix, wherein with one of these program sections predetermined external computer programs can be invoked and and involved in the process.

8. System for performing one of the methods according to one of claims 1 to 9
**characterized in that**
the system comprises a computer system having at least one input device and one output device, on which a software for performing the method according to any one of claims 1 to 7 is stored.

9. System according to claim 8,
**characterized in that**
the computer system is a network with several computers.

10. Medium on which a computer program is stored which performs a method according to any one of claims 1 to 7 when loaded into a computer.

## Revendications

1. Procédé pour générer un code source d'un logiciel informatique pour l'exécution ou la simulation d'un procédé comprenant les étapes suivantes :
- l'analyse d'une description de processus, dans laquelle un processus est représenté sous la forme d'au moins une matrice, des sujets et des phases de processus étant associés à des actions de telle manière, qu'il est déterminé par la matrice, quelles actions sont exécutées par quel sujet dans les phases respectives du processus, des messages étant générés sur la base de règles prédéterminées lors de l'analyse qui sont échangés entre les sujets,
- la génération automatique d'un code source basé sur les informations contenues dans la matrice pour les sujets et les actions et basé sur les messages déterminés avec l'analyse, dans laquelle la matrice comprend au moins trois types d'actions,
l'action E, exécute, durant laquelle un sujet exécute une action,
une action S, soutien, durant laquelle un sujet soutient un autre sujet qui exécute une action E, et
une action I, information, durant laquelle un sujet reçoit une information de la part d'un autre sujet qui exécute une action E,
dans lequel tous les messages suivants sont générés :
- messages E entre un sujet qui exécute une action E dans une phase de processus prédéterminée et un sujet qui exécute une action E dans une phase de processus subséquente ;
- messages S entre un sujet qui exécute une action S est un sujet qui exécute une action E dans la même phase de processus,
- messages I entre un sujet qui exécute une action E est un sujet qui exécute une action I dans la même phase de processus.

2. Procédé selon la revendication 1,
**caractérisé en ce**
**qu'**en plus des messages SR sont générés, lesquels sont envoyés par les sujets qui exécutent des actions E ou des actions non communicatives et qui sont soutenus par d'autres sujets avec de l'information à ses autres sujets pour requérir l'information de soutien.

3. Procédé selon la revendication 1 ou 2,
**caractérisé en ce que**
dans chaque phase du processus les messages sont triés dans l'ordre messages S, message E et message I, de sorte que si des messages SR devraient être présents, ils sont insérés dans l'ordre au moins avant les messages S respectifs.

4. Procédé selon l'une quelconque des revendications 1 à 3,
**caractérisé en ce que**
lors de la génération automatique du code source des fonctions sont générées, qui sont affectés chacune à un sujet, les fonctions comprenant au moins trois fonctions différentes, à savoir ENVOYER, RECEVOIR et FAIRE, les messages déterminés étant échangés entre les sujets avec les fonctions ENVOYER et RECEVOIR.

5. Procédé selon la revendication 3 en combinaison avec la revendication 4,
**caractérisé en ce que**
lors de la génération automatique du code source des actions E sont constitués par la fonction FAIRE dans le code source, et
dans une phase de processus, la (les) fonction(s) RECEVOIR pour recevoir un ou plusieurs messages S est (sont) prévue(s) avant la fonction FAIRE et la (les) fonction(s) ENVOYER pour envoyer un ou plusieurs messages I est (sont) prévue(s) après la fonction FAIRE.

6. Procédé selon l'une quelconque des revendications 1 à 5,
**caractérisé en ce**
**qu'**une pluralité de fichiers de code source sont générés, un fichier de code source comprenant le processus d'une matrice ou les fonctions de l'un des sujets, et
**que** la pluralité de fichiers de code source sont liés les uns aux autres par l'intermédiaire de messages.

7. Procédé selon la revendication 5 ou 6,
**caractérisé en ce que**
des différentes sections de programme prédéterminées peuvent être exécutées avec la fonction FAIRE, qui sont définis par une description correspondante dans la matrice, aussi des logiciels informatiques externes prédéterminés pouvant être appelés et impliqués dans le processus avec une de ces sections de programme.

8. Système pour l'exécution d'un des procédés selon l'une quelconque des revendications 1 à 7,
**caractérisé en ce que**
le système comprend un système informatique comportant au moins un dispositif d'entrée et un dispositif de sortie sur lequel est stocké un logiciel pour exécuter le procédé selon l'une quelconque des revendications 1 à 7.

9. Système selon la revendication 8,
**caractérisé en ce que**
le système informatique est un réseau avec plusieurs ordinateurs.

10. Support sur lequel un logiciel informatique est stocké qui exécute un procédé selon l'une quelconque des revendications 1 à 7 lorsqu'il est chargé dans un ordinateur.
